Europäisches Patentamt

(19) European Patent Office  (11) Publication number: **0 188 339**

Office européen des brevets  **A2**

(12) **EUROPEAN PATENT APPLICATION**

(21) Application number: 86300138.4  (51) Int. Cl.⁴: **F 16 D 55/14**

(22) Date of filing: 10.01.86

(30) Priority: 17.01.85 GB 8501222

(43) Date of publication of application:
23.07.86 Bulletin 86/30

(84) Designated Contracting States:
DE FR GB IT

(71) Applicant: LUCAS INDUSTRIES public limited company
Great King Street
Birmingham, B19 2XF West Midlands(GB)

(72) Inventor: Price, Anthony George
14 Meadow Lane Croseyceiliog
Cwmbran Gwent NP44 2EY Wales(GB)

(72) Inventor: Campbell, Roy
The Corner House 1 Marlbrook Lane Licky Rock
Bromsgrove Worcestershire(GB)

(74) Representative: Spall, Christopher John et al,
BARKER, BRETTELL & DUNCAN 138 Hagley Road
Edgbaston Birmingham B16 9PW(GB)

(54) Improvements in self-energising disc brakes.

(57) The efficiency of disc brakes of the spreading type is improved by providing angularly spaced pilots (40, 41) on only one of the two pressure plates (5, 6), or by eliminating the engagement between the pilot on the arrested plate (6) and the pilot lug (51) which would normally take the reaction on the plates for a normal direction of rotation.

FIG 3.

Croydon Printing Company Ltd.

EP 0 188 339 A2

# IMPROVEMENTS IN SELF-ENERGISING DISC BRAKES

This invention relates to self-energising disc brakes of the kind in which rotatable friction discs provided with linings of friction material are adapted to be brought into engagement with spaced opposed radial surfaces in a housing by pressure plates located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses, so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate known as the "servo" or "self-energising plate", providing a servo action.

Self-energising brakes of the kind set forth may be dry or they may be of the liquid cooled type, and such brakes are commonly used in tractors and like vehicles and are hereinafter called brakes of the kind set forth.

In the self-energising disc brake of the kind set forth disclosed in our GB Patent No. 1 020 091 co-operating portions of the angularly movable pressure plate and of the pilot lugs on the housing are of such a form as to reduce the frictional resistance to continued rotation of the plate acting as the servo or self-energising plate after the rotation of the other plate has been arrested. In one construction described in GB 1 020 091 this is achieved by cutting away each plate adjacent to the pilot lug on the housing which takes the reaction on that plate when it is acting as the servo or self-energising plate.

According to one aspect of our invention in a self-energising disc brake of the kind set forth angularly spaced pilots on only one of the pressure plates co-operate with the pilot lugs on the housing, and the other pressure plate comprising the servo or self-energising plate for a normal direction of rotation is piloted or otherwise carried from the said one pressure plate by the location of the balls or rollers in the co-operating recesses in the adjacent faces of the plates, clearances being provided between all the pilot lugs and the servo or self-energising plate.

This improves the efficiency of the brake since the frictional engagement between the housing and the pressure plate is eliminated. In addition manufacture is facilitated and machining time is conserved since only the pilots on one plate, and one half of the thickness of the pilot lugs on the housing have to be machined.

According to another aspect of our invention in a self-energising disc brake of the kind set forth the engagement between the pilot on the arrested plate and the corresponding pilot lug on the housing which would normally take the reaction on the plates when the brake is applied for a normal direction of rotation is eliminated as is any engagement between that pilot lug and the corresponding pilot on the servo or self-energising plate, the reaction on the servo or self-energising plate being shared by the location of the balls or rollers in the recesses in the adjacent faces of the plates and any remaining contact surfaces between the plates and the housing.

This improves the efficiency of the brake since the frictional engagement between the pressure plates and the housing is substantially reduced. In addition manufacture is facilitated and machining time is conserved since only one pilot and the corresponding pilot lugs on both plates need be machined.

One embodiment of our invention is illustrated in the accompanying drawings in which:-

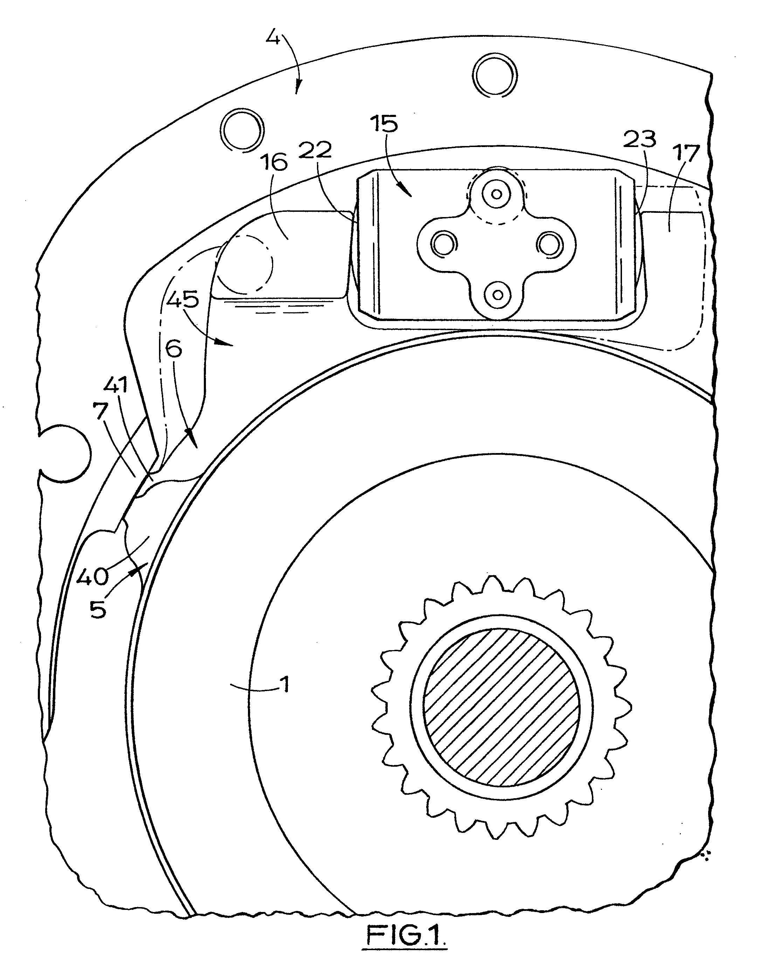

Figure 1 is an end view of a portion of a spreading disc brake;

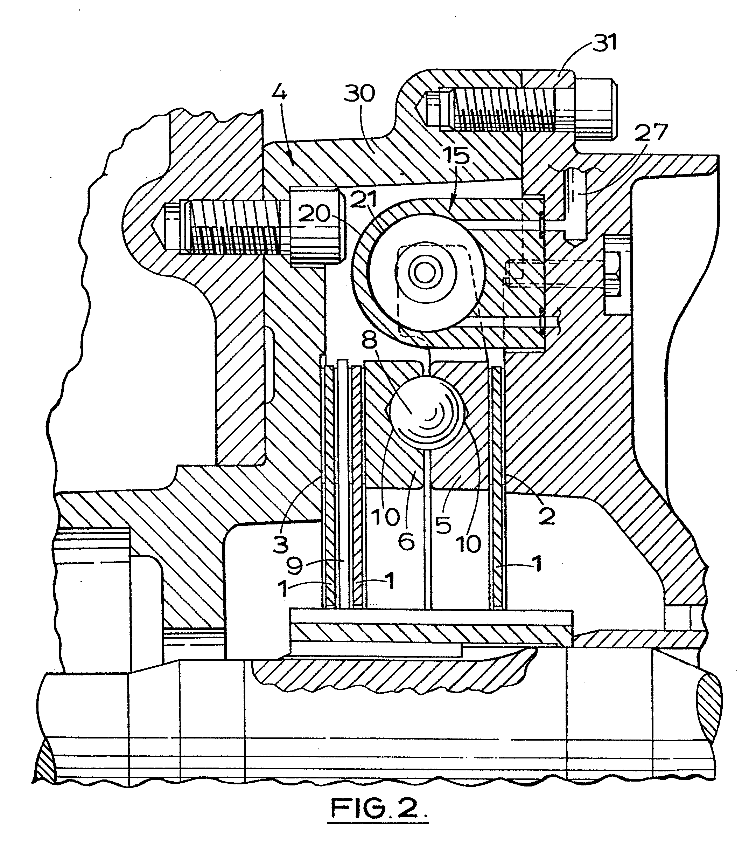

Figure 2 is a transverse section through the brake;

Figure 3 is a diagrammatic view of the actuator unit;

Figure 4 is a force diagram applicable to the unit of Figure 3;

Figure 5 is a force diagram similar to Figure 4 but in which the brake linings are of a different co-efficient of friction; and

Figure 6 is a diagrammatic view of the servo or self-energising plate.

The brake illustrated in the drawings is of a spreading type in which three rotatable friction discs 1 slidably keyed for axial movement on a rotatable shaft are provided on opposite sides with linings of friction material are adapted to be brought into engagement with spaced opposed radial surfaces 2, 3 in a housing 4 by pressure plates 5, 6 located between an adjacent pair of the discs 1 and centred by three angularly spaced stationary pilot lugs of which only one is shown at 7. Balls 8 are located in co-operating oppositely inclined recesses 10 in the adjacent faces of the pressure plates 5, 6. An intermediate plate 9 is disposed between the friction discs 1 of the pair disposed between the plate 6 and the surface 3.

The application of the brake is initiated by moving the pressure plates 5, 6 angularly in opposite directions which causes the pressure plates 5, 6 to move axially relatively away from each other due to the tendency for the balls 8 to ride up ramps defined by the end faces of the recesses 10. This urges the friction discs 1 into engagement with the faces 2 and 3 in the housing 4. The pressure plates 5, 6 are then carried round with the discs until one is arrested by the engagement of a lug on a respective plate with a drag-taking abutment, as will hereinafter be described, whereafter continued angular movement of the other plate, hereinafter referred to as the "servo" or "self-energising plate", provides a servo action.

The brake is applied mechanically for parking or in an emergency by a pull-rod (not shown) which extends through a radial opening in the housing 4 and is coupled to the outer ends of a pair of toggle links of which the inner ends are pivotally connected to respective pressure plates.

For normal service braking the brake is applied hydraulically by an hydraulic actuator 15 which acts between actuator lugs 17 and 16 on the respective pressure plates 5, 6. The lugs 17 and 16 are displaced angularly from the toggle links.

The actuator 15 comprises a cylinder 20 having an open-ended longitudinal through-bore 21 in which work a pair of oppositely acting pistons 22, 23 for engagement with the lugs 16 and 17. Each piston 22, 23 may work through a seal adjacent to the adjacent outer end of the cylinder 20 and carry a seal adjacent to its inner end. A pressure space defined in bore 21 between adjacent inner ends of the pistons 22 and 23 is connected to a master cylinder through a passage 27.

The housing 4 comprises a casing 30 of bell-shaped outline, and an end plate 31 closing the open end of the casing 30. The braking surfaces 2 and 3 are defined by the inner faces of the casing 30 and of the plate 31, respectively.

Each pressure plate 5, 6 is provided with three angularly spaced pilots, of which only one pilot 40, 41 on each respective plate 5, 6 is shown. The three pilots project by substantial distanced from the outer edges of the plates 5 and 6.

The two pilots 40 and 41 extend circumferentially for similar distances which are relatively small in comparison with the circumferential length of the pilot lug 7 with which they co-operate.

The pilot 41 and the lug 16 are combined together to comprise a common ear 45 which is integral with the plate 6 and of which the minimum radial dimension is only slightly less than the distance by which the pilot 41 projects from the outer edge of the plate 6.

The ear 45 enhances the strength of the lug 16 for a given material.

The torque taking abutment which arrests the angular movement of one of the pressure plates 5 and 6 is spaced angularly from the other pilot lugs and is located diametrically opposite the hydraulic actuator 15. This pilot lug, or torque pin, may be positioned at a radius of the brake which is smaller than the radius of the two other lugs which are located at 2 o'clock and 10 o'clock with respect to the actuator 15.

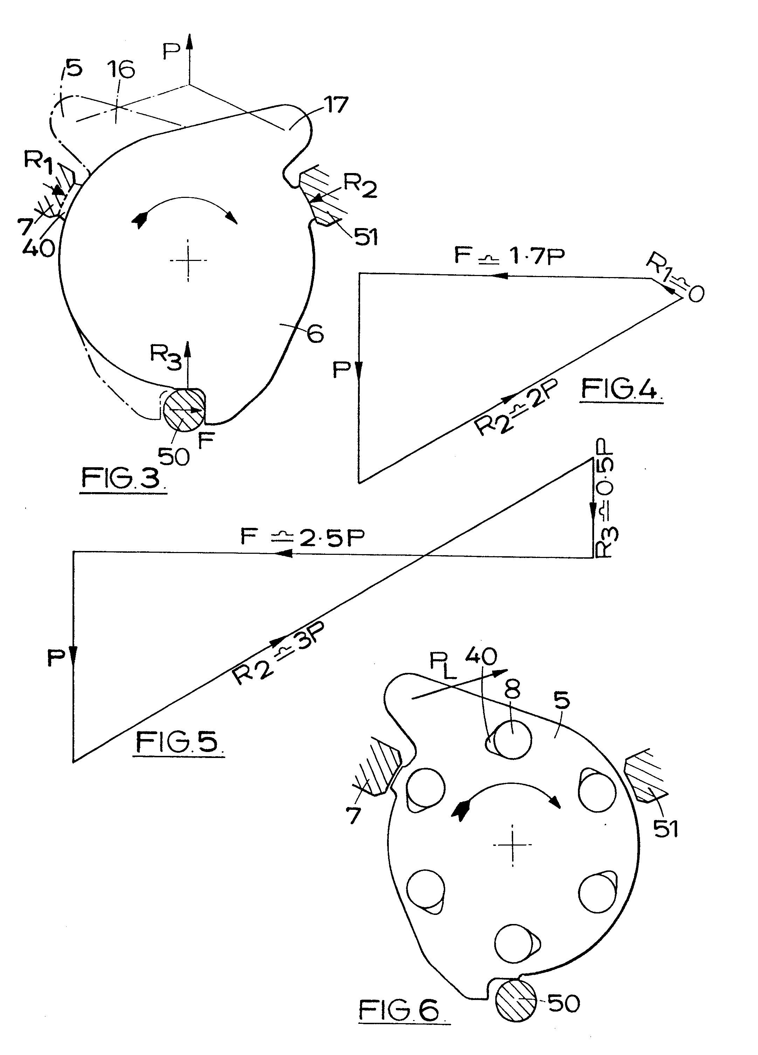

An actuating unit comprising the two pressure plates 5 and 6 is shown diagrammatically in Figure 3 with the torque pin indicated at 50, and the remaining pilot lug at 51. Complementary pilots on the two plates 5 and 6 engage frictionally with the three pilot lugs 7, 50, 51.

To improve the efficiency of the brake by reducing the frictional engagement between the pilot lugs and the pilot clearances are provided between the three pilots on the pressure plate 5 which, as shown in Figure 3, is the servo or self-energising pressure plate according to the normal forward clockwise direction of rotation of the discs as shown by the arrow. The pressure plate 5 is therefore piloted or otherwise carried from the arrested plate 6 by the location of the balls 8 in the recesses 10 in the adjacent faces of the two pressure plates 5 and 6, and all frictional engagement between the servo or self-energising plate 5 and the housing 2 is otherwise eliminated.

The force diagram shown in Figure 4 of the drawings of the forces acting on the unit of Figure 3 shows that for friction linings of a given co-efficient of friction say 0.1, the reaction force $R_1$ at the pilot lug 7 is relatively small in comparison with the reaction force $R_2$ at the pilot lug 51.

Similarly, in the force diagram of Figure 5 for friction linings of a co-efficient of friction of 0.13, the reaction force $R_1$ at the pilot lug 7 does not exist at all.

To improve the efficiency of the brake in another construction, as shown in Figure 6, at least the co-operating force of the pilot lug 51 is eliminated or otherwise omitted altogether whereby to eliminate the possibility of any engagement between that pilot lug 51 and the corresponding pilots on both pressure plates 5 and 6. In such a construction the reaction $P_L$ is shared by the balls 8 and any remaining contact surfaces, namely between the pilots and the corresponding pilot lugs 7 and 50.

In such a construction $P_L < 2.5P$; or $P_L > P$.

CLAIMS

1.   A self-energising disc brake in which rotatable friction discs (1) provided with linings of friction material are adapted to be brought into engagement with spaced opposed radial surfaces (2,3) in a housing (4) by pressure plates (5,6) located between the friction discs and centred by stationary pilot lugs (7), balls or rollers (8) are located in co-operating oppositely inclined angularly spaced recesses (10) in the adjacent faces of the pressure plates, and the application of the brake is initiated by moving the pressure plates angularly in opposite directions, the pressure plates then moving apart by a tendency for the balls or rollers to ride up ramps defined by the edges of the recesses,  so  that  the  pressure  plates  move  into engagement with the friction discs which are urged into engagement  with  the  radial  surfaces,  the  pressure plates being carried round with the friction discs until one is arrested by the engagement of a lug on the plate with a drag-taking stop abutment in the housing, and  the  continued  angular  movement  of  the  other pressure plate known as the "servo" or "self-energising plate", providing a servo action, characterised in that angularly  spaced  pilots  (40,41)  on  only  one  of  the pressure plates (6) co-operate with the pilot lugs (7) on  the  housing,  and  the  other  pressure  plate  (5) comprising  the  servo  or  self-energising  plate  for  a normal  direction  of  rotation  is  piloted  or  otherwise carried  from  the  said  one  pressure  plate  by  the location  of  the  balls  or  rollers  (8)  in  the  co-operating recesses in the adjacent faces of the plates, clearances being provided between all the pilot lugs (7) and the servo or self-energising plate (5).

2.   A disc brake according to claim 1, characterised in that actuating means (15) are disposed diametrically opposite the drag-taking abutment which constitutes one of the pilot lugs (7), and the two other pilot lugs are located at 2 o'clock and at 10 o'clock with respect to the actuating means, a substantial part of the reaction force on the plates (5,6) being taken by the pilot lug in the 10 o'clock position for the clockwise direction of rotation, the said reaction force being transmitted to the said pilot lug through the said one pressure plate and the pilot which engages with the said pilot lug.

3.   A self-energising disc brake in which rotatable friction discs (1) provided with linings of friction material are adapted to be brought into engagement with spaced opposed radial surfaces (2,3) in a housing (4) by pressure plates (5,6) located between the friction discs and centred by stationary pilot lugs (7), balls or rollers (8) are located in co-operating oppositely inclined angularly spaced recesses (10) in the adjacent faces of the pressure plates, and the application of the brake is initiated by moving the pressure plates angularly in opposite directions, the pressure plates then moving apart by a tendency for the balls or rollers to ride up ramps defined by the edges of the recesses, so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate known as the "servo" or "self-energising plate", providing a servo action, characterised in that the engagement between the pilot (40,41) on the arrested plate and the corresponding pilot lug (7) on the housing (4) which would normally take the reaction on the plates when the brake is applied for a normal direction of rotation is eliminated as is any engagement between that pilot lug and the corresponding pilot on the servo or self-energising plate, the reaction on the servo or self-energising plate being shared by the location of the balls or rollers (8) in the recesses (10) in the adjacent faces of the plates and any remaining contact surfaces between the plates and the housing.

4. A disc brake according to claim 3, characterised in that the actuating means (15) are disposed diametrically opposite the drag-taking abutment (7) which constitutes one of the pilot lugs, and two other pilot lugs are located at 2 o'clock and at 10 o'clock with respect to the actuating means, the engagement between the pilot lug in the 10 o'clock position and the corresponding pilots on both plates being eliminated for a clockwise direction of rotation.

5. A disc brake according to claim 4, characterised in that the reaction on the plates (5,6) is shared between the balls or rollers (8), and is taken by the engagements between the remaining pilots and the pilot lugs with which they engage.

FIG.1.

FIG.2.

0188339

FIG.3.

FIG.4.

FIG.5.

FIG.6.